# EUROPEAN PATENT APPLICATION

(11) **EP 2 096 362 A2**
(43) Date of publication of application: **02.09.2009**
(21) Application number: 08380018.5
(22) Date of filing: 28.01.2008
(51) Int. Cl.: F24D 11/02, F24J 2/34, F24J 2/54

(54) **Solar tracker for thermal and photovoltaic panels with forced air system, applicable to buildings description**

(30) Priority: 01.02.2007 ES 200700273
(71) Applicant: Lahuerta Romeo, Manuel, 50171 La Puebla de Alfinden (ES)
(72) Inventor: Lahuerta Romeo, Manuel, 50171 La Puebla de Alfinden (ES)
(74) Representative: González Ballesteros, Pedro

(57) **Abstract**

A SOLAR TRACKER FOR THERMAL AND PHOTOVOLTAIC PANELS WITH A FORCED AIR SYSTEM, APPLICABLE TO BUILDINGS, with a "panel-carrying framework on a dome, whose interior features a heat accumulator, acting as a column; attached to the base of this there is a fan and radiator capable of blowing treated air towards the apartments, it being installed over the stairvvell, which acts as a carriage duct, also acting as a fire protection system as it creates centrifugal radial flows, expelling harmful gases on opening doors and windows. The framework tilts on two axes of a spider joint located between two yokes, one of these fixed on the column and the other tilting, this last supporting the framework. Four servo-cylinders, two per axis, cause it to be directed towards the sun. The rows of the framework, arranged on different levels, in the shape of a stepped pyramid, support juxtaposed thermal and photovoltaic panels, it being possible to direct those appropriate towards the sun while the others are shaded.

## Description

### OBJECT OF THE INVENTION

The invention, as expressed in the title, relates to a solar tracker for thermal and photovoltaic panels with a forced air system, applicable to buildings.

More specifically, the object of the invention consists of a solar tracker with a large surface area, designed to be located on buildings, capable of carrying thermal and photovoltaic panels in the proportion deemed appropriate, whose supporting column, being dome-shaped, incorporates a heat accumulator with a great storage capacity, which satisfies the greater part of the needs for sanitary hot water and heating; attached to its base there is a forced air system, operated at variable speeds, capable of satisfying the needs of renewal and carriage of heat and fresh air to the apartments, it being directly connected to the stairwell which, acting as a carriage duct, distributes the flow of filtered, conditioned air through the filter-protected apertures located by the entrance doors of each apartment.

The forced air system is sized in such a way that in the event of a fire, its rotation speed will increase, causing a strong air draught which, acting as a back-draught, prevents the spread of the fire in the direction of the upper floors, radially expelling the gases and flames towards the exterior by simply opening the windows and doors of the apartment wherein the fire is located, thus maintaining the staircase free of smoke, facilitating the evacuation of all the residents via the main staircase. In order to achieve this effect, the building should be designed as a pressurisable enclosure wherein the main entrance consists of double doors with alternate outward opening, in parallel with airtight revolving doors. In accordance with this reasoning, the windows should also open outwards. The rooms which form the apartments should also be connected to the central corridor via filter-protected apertures and the exterior rooms should feature filter-protected apertures which guarantee the renewal airflow and enable the expulsion towards the exterior of monoxides and other harmful gases. Therefore, the tracking assembly, dome, accumulator, the air blower and the building which is planned as a pressurised container together form a unit for the correct application of this invention.

We are expounding a system which can easily be integrated into a building, although exceptionally singular buildings may be designed as apartments, offices or other uses which produce power by means of thermal and/or photovoltaic panels and which incorporate air renewal systems, improving safety and healthiness, while their profitability increases by selling the surplus power to the network.

### FIELD OF APPLICATION

The field of application of this invention is that of the industry devoted to the construction and manufacture of elements for producing solar power, thus including the field of construction and of refurbishment of buildings, as it is particularly designed to contribute to a better design, construction and refurbishment of buildings in accordance with the innovations of the new Technical Building Code, which is the framework of standards which establishes the basic requirements regarding the quality, safety and habitability of buildings and their installations, passed in March 2006 and included in Royal Decree 314/2006, which requires the use of thermal panels in order to satisfy certain particular requirements among the needs of the building.

By means of this equipment, a further step forward is taken by integrating in a single piece of equipment other needs of modern buildings such as air handling, air renewal and the evacuation of the residents in the event of fire.

### BACKGROUND OF THE INVENTION

The high cost of urban land makes it ever more necessary to design buildings which feature the greatest number of apartments possible, while complying with the building limits imposed by local regulations. This need for concentration restricts and conditions the spaces available for the implementation of the solar power collecting systems to be integrated into the buildings. The surface area available on the roofs is scarce when it comes to satisfying even the minimum requirements established in the Technical Building Code, even when resorting to the installation of collectors on the south façades, which in many cases is neither architecturally nor aesthetically acceptable. On the other hand, the problems regarding the distribution of the power collected within the building entail a waste of the same, and also extra cost due to their not being located in the most appropriate location for their most advantageous use.

Furthermore, the owners of the apartments share a series of communal areas and services, forming a Community of Property Owners. However, it is impossible for all buildings to be the same due to size, usage and orientation, among other parameters; this hinders the reaching of agreements in various matters, and causes some of the owners, acting as individuals, to instigate initiatives to alleviate different needs without causing any benefit to the rest, thus creating inequality amongst the owners. The advantage of certain services being centralised and being included in the building design is desirable for a number of reasons.

The power consumed by buildings, in its various uses, reaches figures which approximate 24% of the total power required by the Community. The probability of a common area, such as the flat roofs of buildings, being used for the location of a piece of equipment which will satisfy the majority, if not the entirety, of the power needs of a Community of Property Owners, is more than advisable. The Energy Efficiency Certificate for buildings, passed recently, classifies them in accordance with their energetic quality with seven letters and colours which range from the most efficient (A) to the least efficient (G), in accordance with the reduction in CO₂ emissions, as a consequence of a lower power consumption. The new Technical Building Code is the appropriate framework to comply with this need, and the patent disclosed herein represents a clear alternative to this situation.

With regard to the current state of the art, it should be mentioned that various types of solar trackers are known, this inventor and applicant himself being already the titleholder of Patent no. P200402167 relating to a "Solar Tracker" and of Patent no. P200602516 called "Three-Axis Solar Tracker"; however, it should be mentioned that he is unaware of the existence of any solar tracker for thermal and photovoltaic panels with a forced air system, applicable to buildings, featuring technical, structural or configurational characteristics similar to those featured by the invention announced herein, which incorporates certain improvements and innovative characteristics which represent a considerable improvement on or an alternative to the devices known in the market for this same purpose.

### EXPLANATION OF THE INVENTION

All Europe, and in general, all countries located above or below the 40^{th} parallel have variable irradiation at each time of year. At this parallel, the solar trajectory in summer covers up to 242° azimuthally and 73° zenithally; in winter the same being 140° and 23°; this clearly shows that the power gain obtained with a solar collector located on a structure equipped with a tracking system, in comparison with another installed on a fixed location, is 40% annually, it being even more distinct on parallels greater than parallel 40.

On the other hand, the power requirements for sanitary hot water and heating are greater in winter, precisely when less radiation is available; this justifies the need for a better use of the same, which will doubtless be achieved by locating the panels on a solar tracker.

In buildings where several apartments are grouped together, the needs for heating and sanitary hot water for bathing coincide with the evenings and the mornings, times at which the solar radiation is scarce or inexistent; thus the need to accumulate the heat obtained during the hours of highest radiation (midday) in large, insulated containers. It may thus be assumed that the combination of solar tracker and large accumulator is justified.

Conversely, during the months of spring, summer and autumn, when the radiation is greater, the needs for heating are scarce or inexistent, and for this reason there will be a surplus of heat which, due to not being used, will have to be dissipated. However, the power requirements of the building continue to be significant, and even more so in summer if air handlers are used to air-condition the building. As air conditioners consume electricity both to activate the compressor and to drive the transfer flows, it will be advisable to equip the tracker with photovoltaic panels in addition to thermal panels; for this reason, in this invention the rows of panels which constitute the tracker are equipped with both types of panels, juxtaposed in the same row, in such a way that in accordance with the demand at each time of day, the row may rotate, so that either the photovoltaic panel or the thermal panel, whichever is more appropriate, faces the sun by simply rotating the row of panels through 180°. Turning one towards the sun entails turning the other towards the shade. This is advisable in order to protect the thermal panels and the accumulator at times of high radiation and low heat demand.

Conversely, in the case of the photovoltaic panels there will be no limit, as the surplus power which may be produced may be sent to the network, billing the electricity distribution company with recourse to the legislation of the Royal Decree no. 436/2004 of 12^{th} March, which establishes the methodology for the updating and systematisation of the legal and economic regime for electric power production under a special regime, providing economic income to the Community of Property Owners.

In order to comply with the requirements of the Technical Building Code in questions of healthiness, it is necessary to foresee interior air renewal systems, in such a way that the enclosures may be suitably ventilated, eliminating the pollutants which are habitually produced during the normal use of the same; to do this an exterior air draught is provided, this being sufficient to expel the air which is fouled by pollutants to the exterior, also limiting the humidity inside the building. The innovation included herein provides a fan which, attached to the base of the accumulator tank or directly on the dome in the case of singular buildings, and driven by a synchronised variable speed drive, brings about the renewal draught which this requirement makes mandatory.

The incoming air will be drawn in from the exterior through a mesh filter and driven by the fan towards the stairwell which, acting as a duct, will communicate with the apertures located above the doors of the apartments and inside the same, as indicated by the Technical Building Code, distributing the airflows necessary to comply with this requirement. This driven air, before entering the stairwell, will pass through a large radiator which, as desired, will exchange heat with the accumulation tank by activating a hot water recirculation pump and, by adjusting the speed of the fan, will warm the air, thus fulfilling the heating needs of the building. Water mist nozzles will be located behind the radiator in order to moisten the airflow should this be dry. The entire system will be monitored by sensors and a robot, verifying that all the process variables are within the tolerances foreseen. When the exterior air has the appropriate humidity and temperature, the system will simply drive the same into the interior with no need for modification of any parameters. During cool summer nights, the system will be used to cool the building by providing cool air, with no need to open any windows, thus permitting a pleasant rest, uninterrupted by flying insects, unpleasant smells or noise. When cooling of the air is desired, a second radiator will be arranged in parallel with the first which, being the evaporator of a heat pump, will cool the air driven into the building while at the same time it heats the water in the accumulation tank, the condenser being located within the same. This, therefore, is a water-air heat pump. This solution will allow a better use of the power absorbed by the heat pump compressor, making available more useful hours for the daytime production of electric power by the photovoltaic panels which is supplied to the network. It should be remembered that the production of electrical power during daytime hours is particularly advantageous for the electrical system, as these are the hours of peak demand.

The power available at the motor of the fan will, in the event of a fire emergency, be capable of forcing a large quantity of air at low pressure (approximately 30 mm H₂O so that by causing the opening of the doors and the windows of the area where the fire is located it will bring about a complete outward radial sweep of the fire and smoke, maintaining the stairwell clear, thus facilitating the evacuation of the building. When a fire is detected, evacuation is first and foremost. The danger to people originates primarily in the smoke and the toxic gases produced, rather than in the fire itself. Expelling these gases is of the utmost importance. Controlling and extinguishing the fire will be easier if the fire-fighters or the building personnel themselves can reach the fire from the inside, their retreat also being guaranteed.

For this reason, the building must be designed as an almost airtight enclosure, with apertures and access and evacuation systems which will allow the correct use of these procedures; at the same time the residents of the building should be trained for these emergency situations. We would like to justify once again why the equipment forms part of a unit, being yet another integral part of the building.

Another possible application of the heat accumulator would be as a contribution to conventional heating systems, such as underfloor heating systems, water-filled radiators or for the heating of communal covered swimming-pools. Said contribution may be carried out by means of independent coils for each loop whereby the thermal fluid which exchanges heat with the receiver of the same will run.

When the building is topped by a dome-shape instead of a flat roof, the geometry of the same should be such that it is integrated into the sweep described by the movement of the solar tracker framework, so that it does not interfere with the latter.

The equipment to be supplied will be anchored to the building by means of a set of struts arranged so as to be solidly fixed to the supporting structure of the same, taking into account its shape and dimensions for the connection of pipes and ducts between the equipment and the building.

Should it be so desired, the equipment may incorporate a city water treatment plant in order to improve the physicochemical or biological characteristics of the water destined for consumption, and for the better operation and durability of the equipment, and of the boiler or heat pump used to complement its performance.

The dimensions of the tracker framework will be determined in accordance with the power needs of the building, and within the limits imposed by the applicable legislation. In principle, its surface area will not be greater than the ground plan of the building. The establishment of the loads exerted on the building by the equipment will be calculated in accordance with the standard. The manufacturer will provide the architect with these values for consideration in the structural project. However, the control system envisages that in emergency situations or in high winds, the framework will protect itself by assuming the horizontal, least-resistance position.

With regard to the system for pointing at the sun, we would like to state that this is achieved by tilting. This is a fundamental aspect in a tracker which features on its framework thermal panels through which glycolated water flows; said panels being connected to a fixed accumulator tank, anchored to the building, avoiding twisting of the flexible ducts with no need for recourse to large-diameter multi-thread rotating connectors; this would also be the case with the cables of the photovoltaic panels. Let us consider the case in which the tracker is installed on the 60^{th} parallel or greater, where in summer the sun does not set at 360°; for this reason the fact that the direction system is developed so that he framework will tilt on two axes of a spider joint whose supports are on two yokes, one of these being solidly fixed to the column, on which the spider tilts, and a second yoke being solidly fixed to the framework which tilts on the spider, all of this being activated by four servo cylinders, two per axis, which control the direction and withstand the overturning moments.

The panels grouped in rows and at different levels on the chassis formed by variable-section beams constitute the assembly which we call framework. The design of this type of framework, with a stepped pyramid shape, is justified due to reasons of stability and in order to achieve a better heat dissipation over the photovoltaic panels; also to minimise the overturning moments caused by the wind when in its horizontal protection position.

With regard to stability, it is a question of achieving that the centre of gravity of the tilting framework coincides with the tilting axis of the spider. The arrangement of the rows of panels below the tilting axes around the periphery of the framework contributes to the achievement of this requirement.

With regard to the dissipation of heat, we should mention that the nominal power of photovoltaic panels is reduced by 0.5% for each degree over 25°C of the panel's operating temperature. The nominal power of a panel operating at 60°C in summer will be reduced by 17.5%. The arrangement of the panels in rows and at different levels enables a better dissipation of heat from the panel. Therefore, this arrangement will enable working temperatures of the panel of approximately 10° lower, with the corresponding increase in production and reduction in the ageing of the equipment.

In order to achieve the rotating movement of the rows of panels it has been foreseen that the joining of the same to the chassis should be executed by means of a rotating support with a hollow interior in order to thus supply the thermal fluid through a single-thread rotating connection, one at each end of the row. The turning movement which allows the exposure of one panel and the shading of the other is achieved by means of a hydraulic turning cylinder and a toothed belt.

Activation of the four hydraulic servo cylinders which control the tilting movement, and also the rotation of the rows of the framework, is achieved by means of a computer-operated hydraulic power unit and electric control valves from the feedback of a set of position sensors.

Exceptionally, singular buildings could be constructed, based on this design of dome-plus-solar tracker, whose silhouette would be in keeping with the sweep described by the framework.

Therefore, the new solar tracker for thermal and photovoltaic panels with a forced air system, applicable to buildings, represents an innovative solution whose characteristics and operation was unknown until now; these being reasons which, together with its practical usefulness, endow it with sufficient grounds for the obtaining of the privilege of exclusivity applied for.

### DESCRIPTION OF THE DRAWINGS

To complement the description which is being made, and with the purpose of contributing to a better understanding of the characteristics of the invention, a set of drawings with an illustrative and non-limitative character is attached as an integral part of said description, wherein the following is portrayed:

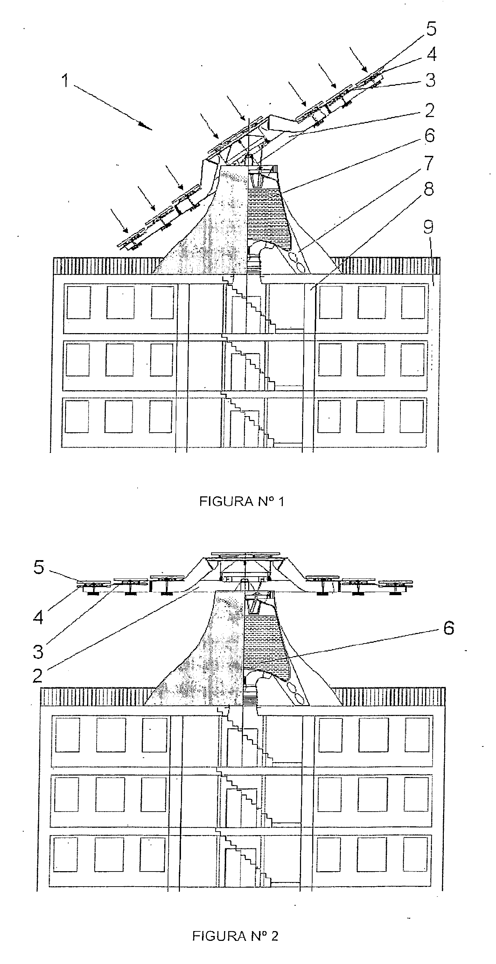

Figure 1 portrays a profile view of the solar tracker in accordance with the invention, with the panel framework directed towards the sun. This is on a dome in cross-section along its ordinate axis, with one half filled in and the other in section, in which may be seen one half of the heat-insulated accumulator tank, this being full of water and resting with its anchoring struts on the structure of the stairwell of the building. Attached to the base of the tank the air forcing system may be seen with the motor, fan and radiator, whose diffuser is connected to the stairwell of the building.
Figure 2 portrays a profile view of the solar tracker with the panel framework in a horizontal position; this corresponds to the nocturnal position, which coincides with the position for protection against strong winds or anomalies. The drawing portrays the rows of panels arranged at different levels in the shape of a stepped pyramid.

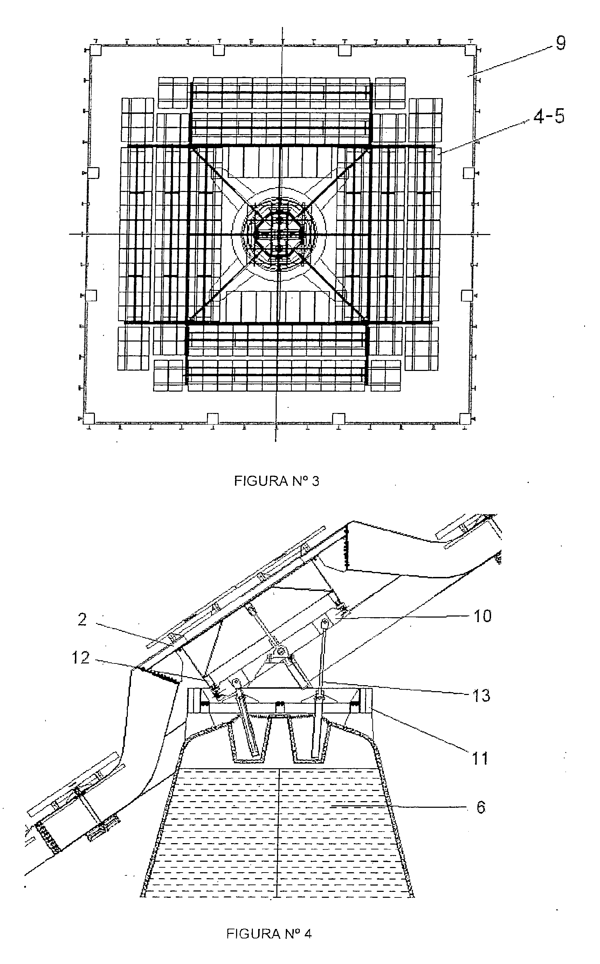

Figure 3 portrays a plan view of the solar tracker on the plan of the building, wherein the shape of the perimeter and the arrangement of the panels on the framework may be seen.
Figure 4 portrays a drawing of the framework tilting system. The framework is guided by means of a series of Euler precession angles (rotation around a direction fixed to the column) and nutation angles (rotation around an axis affected by precession). The precession is originated by rotating around the first axis of a spider joint, supported by two bearings at the ends of said axis and fixed to the column. The nutation is originated by rotating the framework around the second axis of the spider (affected by the precession), supported by two bearings at its ends, which are solidly fixed to the framework. The two rotations, precession and nutation, are brought about by two pairs of hydraulic cylinders, each of these being solidly fixed to the column and with the framework respectively.

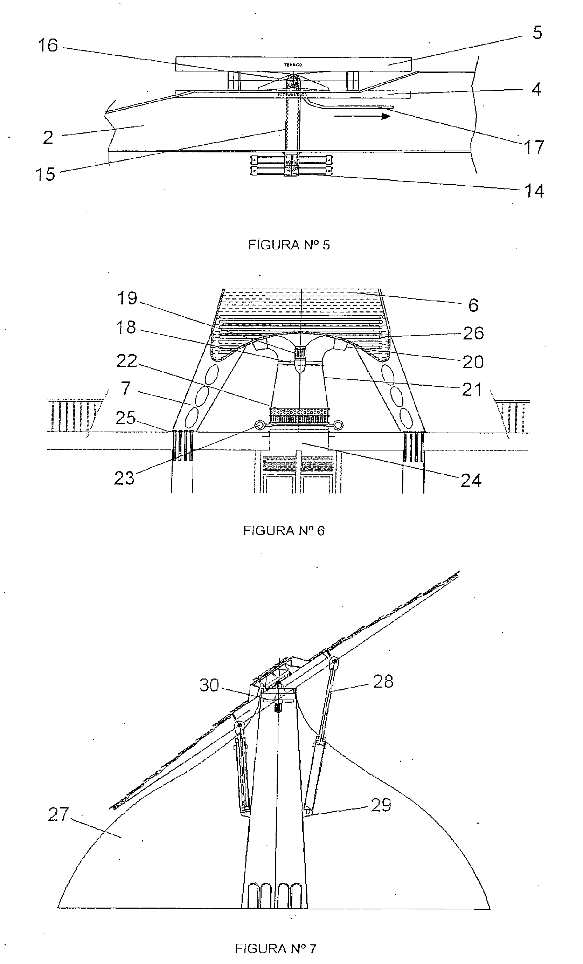

Figure 5 portrays the rotating mechanism for the rows of panels. It includes the detail of the location of the photovoltaic panels on one side and the thermal panels on the other, in such a way that one panel is exposed to the sun and the juxtaposed panel is in the shade. The 180° rotation hydraulic motor located at the base of the frame activates the rotating axle of the row of panels by means of a toothed belt. The rotating connections for the glycolated water which circulates round the primary loop between the thermal panels and the accumulator are located on the turning axis.
Figure 6 portrays a cross-section of the air forcing system attached to the base of the accumulator, wherein the inlet air filter, the motor-driven fan and the conical diffuser may be seen; at the lower end of this last, two radiators and mist nozzles for adjusting the relative humidity are located. It also portrays the struts and flanges which anchor the same to the structure of the building, and the connection hose to the stairwell. In the interior of the heat-insulated tank one may see the heat exchanger of the primary glycolated water loop. The flat roof is rounded off with a balcony round its periphery.
Figure 7 portrays a singular building whose silhouette is dome-shaped, with the tracker upon the same. In this case, due to its considerable size, the hydraulic cylinders which control the direction of the framework may be installed either internally or externally, depending on the external design of the building, and are articulately fixed on a strong structure which may be the building or a column made for this purpose. The fan may act as an extractor for air renewal and/or as a pressurising fan in the event of a fire, by simply operating an electric switch which changes its polarity.

### PREFERRED EMBODIMENT OF THE INVENTION

In view of the aforementioned figures, and in accordance with the numbering adopted, a preferred embodiment of the solar tracking equipment for thermal and photovoltaic panels with a forced air system, applicable to buildings may be observed; this is comprised of the items and elements indicated and described in detail below.

It should be mentioned that the energetic quality of the building will depend entirely on the designer of the same. By means of the "CALENER" program or another program validated for this purpose, the energetic behaviour of the building during the entire year will be simulated, taking into account all the factors which most affect its consumption; the different meteorological conditions, the building envelope, its orientation, the type of heating chosen, the demand for sanitary hot water, the type of cooling and lighting, etc. In accordance with the desired result, be it class A, B, C, D, E, F or G, and once the requirements of the same under different meteorological conditions are known, and bearing in mind the energy resources available from the sun, the surface area and the quality of both the thermal and photovoltaic collectors will be gauged, thus obtaining the framework surface area necessary for each rating required.

Thus, for example a class A building will entail that the reduction in CO₂ emissions Will be greater than 60% of those featured by a building which complies with the minimum requirements of the Technical Building Code.

The designer will compare requirements and availabilities in order to gauge the surface area of the collectors of the framework, the accumulator tank, the heat pump and the distribution system (fan), taking into account the coverage of the requirements or foreseeing parallel back-up systems in order to cover certain peak loads or periods of low availability of solar energy.

The designer will request the equipment manufacturer for the drawings of the same, with the levels of implantation and the loads (weights, thrusts and moments) which the equipment will bring to bear on the strong structure of the building, in order to determine its correct size. The designer will take special care regarding the size of the points where the equipment is anchored and connected to the building. In the case of a building under refurbishment, the equipment may be sized in accordance with the loads which the existing structure may carry.

From this point onwards, once the model of the equipment to be installed has been chosen, said equipment will be comprised of a set of components, as may be seen in the figures portrayed. Thus, the tracker (1) in question will be constituted from a chassis (2) on which a set of rows (3) of panels, whereto the photovoltaic panels (4) and the thermal panels (5) are affixed rests.

We shall call the assembly consisting of the chassis (2), rows (3) and panels (4 and 5) the "framework". Said framework rests on a column (6) which at the same time acts as a duly heat-insulated accumulator tank, which rests, by means of struts (7) on the pillars (8) which form the supporting structure of the building (9), fixed by means of the anchor points (25), as may be seen in Figures 1, 2 and 6.

On examining said Figure 6 it may be seen how, placed against the base of the column (6) there is located the air blowing system, formed by an axial flow fan (18) which, driven by a variable speed drive (19) draws air from outside through a filter (20) so that once energised and directed through a diffuser (21) it will pass through the radiator (22) either exchanging or not exchanging heat with the accumulator tank (6) by means of a closed water loop. The energised airflow, once moistened -should this be advisable- by the discharge of water mist through the nozzles (23), is distributed to each apartment, via the stairwell (24), which acts as the main distribution duct.

A set of sensors (not portrayed), located both outside and inside the building and the equipment, will provide the necessary information for the computer program to prepare the appropriate orders in order to achieve the objective of the desired comfort and healthiness. In the event of a fire, the smoke detectors will activate a general alarm, and if deemed advisable, the opening of the doors and windows of the apartment where the fire is burning could also be automated.

With regard to the solar tracker (1), this will be directed by another program which, containing the equations of the solar trajectory according to the day, time and latitude of the location, will order the servo cylinders (13) to move in order to achieve the correct focus, by modifying the position of the spider joint (10) and of the framework chassis (2). The framework is articulated on the spider (10) by means of two oscillating supports (12) thus achieving the tilting on one axis. In turn, the spider (10) is articulately supported by two more oscillating supports to the structure (11) which is solidly fixed,to the upper base of the column (6). The dimension of the framework shall not overlap the periphery of the structure (9) of the building (Figures 3 and 4).

When the temperature of the accumulator tank or column (6) is as programmed, the rows (3) of panels will turn, shading the thermal panels (5) and placing the photovoltaic panels (4) in the sunlight, thus achieving two favourable effects. On the one hand, undesirable high temperatures on the thermal panels (5) will be avoided, and on the other, the production of the photovoltaic panels (4) will increase, thus sending more power to the network.

The rotating mechanism of the panels (3) consists of a hydraulic rotating motor (14) which, by means of a toothed belt (15) or similar, will rotate the row of panels, making it turn on an oscillating support (16) at whose hollow centre a rotating connection is located, which is connected to the pipe (17) which carries the fluid of the primary loop, as may be observed in Figure 5. The hydraulic rotating motor (14) will be driven by a hydraulic station with corresponding electro-valves as will the servo-cylinders (13) which control the direction of the framework. Linear encoders or potentiometers will inform the control system of the position of each hydraulic actuator.

The panels which form the apex of the framework and those located at the corners are not able to turn, and therefore in these spaces photovoltaic panels (4) will be installed. These represent approximately 20% of the surface area of the framework. On the remainder of the surface area of the framework (80%) double juxtaposed thermal (5) and photovoltaic (4) panels will be installed.

The accumulator tank or column (6) is conceived as a tank with great thermal inertia; the thermal fluid is maintained at a certain level and does not flow through any'external loop. Inside the accumulator tank (6) there are a number of heat exchangers in the form of coils (26), marked in Figure 6, which exchange heat with each demand, forming independent loops as a safety measure.

At certain latitudes, the installation of a water-air heat pump within the assembly of the equipment will be advisable; this will yield heat via the condenser to the accumulator in summer, while it provides cold air to the air distribution loop, where a second radiator will be installed as' an evaporator. In this way, we will have a double advantage, producing sanitary hot water and cold air with the same operating power of the compressor, which in many cases will be photovoltaic-powered, as the hours of the greatest demand of cold air will coincide with the hours of the greatest solar radiation. At low-radiation latitudes, boilers or other procedures which complement the need for heat may be included in the equipment.

The motor (19) and the fan (18) are sized so that, in the event of a fire emergency, they will be able to provide a large airflow which, acting as a back-draught, will cause a draught capable of expelling the smoke, and gases to the exterior by simply opening the doors and windows of the apartment where the fire is located. In this way it will be possible to maintain the stairwell free of smoke and the residents of the building will be able to evacuate the same without any problems. The designer of the building shall foresee this situation, designing the building as an almost airtight unit with double doors and revolving doors at the entrance. The windows shall be designed so as to open outwards. This system may be automated in order to both trigger the alarms and to bring about the opening of the doors and windows as the fan increases speed.

Finally, as may be seen in the example portrayed in Figure 7, when singular buildings are constructed, based on the design of the solar tracker (1) on a dome (27), it may be advisable, due to its large dimensions, for the servo-cylinders (13) and the fan (18) to rest directly on a pillar (29), thus freeing the building envelope from loads. The silhouette of the building will, in all cases, be inscribed within the envelope described by the framework.

The nature of the invention having been sufficiently disclosed, likewise the embodiment of the same, it is not considered necessary to expand further on the explanation for a person skilled in the art to understand its scope and the advantages derived from the same, stating that, within its speciality, it may be executed in other embodiments which differ in detail from that indicated as an example; these will likewise be covered by the protection claimed herein, on condition that it shall not alter, change or modify its fundamental principle.

## Claims

1. A SOLAR TRACKER FOR THERMAL AND PHOTOVOLTAIC PANELS WITH A FORCED AIR SYSTEM, APPLICABLE TO BUILDINGS, especially to the type of building designed as a pressurisable enclosure wherein the main entrance consists of a double door with alternate outward opening, in parallel with airtight revolving doors; wherein the windows, in accordance with this reasoning, should also open outwards; the rooms which form the apartments should also be connected to the central corridor via filter-protected apertures, and the exterior rooms should feature filter-protected apertures which guarantee the renewal airflow and enable the expulsion towards the exterior of monoxides and other harmful gases, **characterised in that** it is comprised of a panel-supporting framework installed on a dome, in the interior of which a heat accumulator is located which acts as a column; attached to the base of this is a motorised fan and radiator capable of blowing air, this having been treated so as to satisfy the needs for air renewal, installed above the stairwell which, acting as a carriage duct, communicates with each apartment via the apertures provided for this purpose; this also acts as a fire protection system by bringing about centrifugal radial flows when it increases speed and opens the doors and windows of the apartment where the fire is located, thus bringing about the expulsion of the harmful gases and smoke towards the exterior and allowing the residents to leave the building via the stairway.

2. A SOLAR TRACKER FOR THERMAL AND PHOTOVOLTAIC PANELS WITH A FORCED AIR SYSTEM, APPLICABLE TO BUILDINGS, according to claim 1, **characterised in that** it achieves the use of the heat provided by the heat pump condenser, accumulating the same in the tank in order to meet the need for sanitary hot water, without increasing the consumption required due to the need for cooling, enabling at the same time greater photovoltaic production at times of high solar radiation.

3. A SOLAR TRACKER FOR THERMAL AND PHOTOVOLTAIC PANELS WITH A FORCED AIR SYSTEM, APPLICABLE TO BUILDINGS, according to claims 1 and 2, **characterised in that** the framework is formed by rows of panels arranged in the shape of a stepped pyramid, that it features juxtaposed thermal and photovoltaic panels which may rotate, directing those appropriate towards the sun while the others are shaded; and **in that** said stepped pyramid-shaped arrangement of the framework allows the location of its tilting point close to the centre of gravity.

4. A SOLAR TRACKER FOR THERMAL AND PHOTOVOLTAIC PANELS WITH A FORCED AIR SYSTEM, APPLICABLE TO BUILDINGS, according to claims 1 to 3, **characterised in that** the framework achieves its pointing towards the sun by means of tilting on the two axes of a spider joint located between two yokes, one of these fixed on the column and the other tilting around the spider itself and which supports the framework; and **in that** its operation is achieved by means of four servo-cylinders, two per axis, allowing the connection of the primary loop which supplies the heat-exchanging fluid to the thermal panels by means of flexible pipes; for this reason with no need for rotating joints.

5. A SOLAR TRACKER FOR THERMAL AND PHOTOVOLTAIC PANELS WITH A FORCED AIR SYSTEM, APPLICABLE TO BUILDINGS, according to claims 1 to 4, **characterised in that** optionally it may incorporate in the equipment a city water treatment plant and a heat pump in order to improve its performance with regard to the healthiness and energetic quality of the building.
